# EUROPEAN PATENT APPLICATION

(11) **EP 4 729 340 A1**
(43) Date of publication of application: **22.04.2026**
(21) Application number: 24207517.4
(22) Date of filing: 18.10.2024
(51) Int. Cl.: B60L 50/70, B60L 58/33, H01M 8/0432, H01M 8/04858

(54) **MANAGING TRANSITION OF A FUEL CELL VEHICLE TO A HOT OPERATING MODE**

(71) Applicant: Volvo Truck Corporation, 405 08 Göteborg (SE)
(72) Inventor: BLOMGREN, Fredrik, 425 35 Hisings Kärra (SE); HINDI, Gustavo, 449 50 Alafors (SE); DESAI, Parthav, 417 28 Göteborg (SE)
(74) Representative: Valea AB

(57) **Abstract**

A system and method for controlling transition of a fuel cell vehicle from a normal operating mode to a hot operating mode when a power demand from a fuel cell system of the fuel cell vehicle increases. The method comprises determining a required value of a traction power from the fuel cell system for the fuel cell vehicle; determining a net electric power output value of the fuel cell system based on a fuel cell system power output and a cooling electrical power value; and controlling the fuel cell vehicle to transition from the normal operating mode to the hot operating mode by increasing the net electrical power output from a first fuel cell system output level threshold level to a second fuel cell system output level threshold level beyond which an increase in the fuel cell power output results in a decrease in the net electric power output value.

## Description

### TECHNICAL FIELD

The disclosure relates generally to controlling operation of a fuel cell vehicle for managing a transition of the fuel cell vehicle to a hot operating mode of the fuel cell vehicle.

The disclosure can be applied in heavy-duty vehicles, such as trucks, buses, and construction equipment, as well as in stationary applications. Although the disclosure may be described with respect to a particular vehicle, the disclosure is not restricted to any particular vehicle.

### BACKGROUND

A fuel cell is an electro-chemical device that includes an electrolyte sandwiched between two electrodes such as an anode and a cathode. Solid polymer electrolyte fuel cells, which employ a proton exchange, solid polymer membrane electrolyte, electrochemically convert reactants - fuel such as hydrogen received at the anode or anode side, and oxidant such as oxygen or air received at the cathode or cathode side, to generate electric power. Two or more fuel cells are usually arranged together into a fuel cell stack, in order to provide a higher output voltage. One or more fuel cell stacks may form a fuel cell system. Proton exchange membrane (PEM) fuel cells are considered well suitable for vehicular applications e.g. in fuel cell electric vehicles (FCEVs).

A fuel cell vehicle comprises a cooling system that comprises a coolant circulating therein that is passed through a fuel cell stack of the fuel cell system to maintain a temperature of fuel cells in the stack. When a fuel cell vehicle requests increased power from its fuel cell system, e.g., at long steep climbs or at higher speeds, the fuel cell system generates a lot of heat in the coolant of the cooling system and cooling the vehicle becomes difficult. Hot ambient temperatures exacerbate the task of keeping the fuel cell system at a desired temperature. Furthermore, a high heat generation or energy loss at high fuel cell system powers entails an increased fuel consumption. Thus, performance of a FCEV during long and steep climbs, or in other cases at which a power demand on the fuel cell system increases, may be a major limiting factor that leads to increase in cost of operating the fuel cell vehicle and/or decrease in performance and fuel economy.

Various methods have been proposed for controlling a fuel cell system and a cooling system of a fuel cell vehicle. However, a need remains for improved methods for controlling the fuel cell vehicle, particularly at periods of increased power demands on the fuel cell system.

### SUMMARY

According to a first aspect of the disclosure, a control system for a fuel cell vehicle is provided, the fuel cell vehicle comprising a fuel cell system comprising a fuel cell stack configured to generate power by electrochemical reaction, and a cooling system configured to circulate a coolant through the fuel cell system to dissipate heat generated by the fuel cell system. The control system comprises processing circuitry that is configured to control transition of the fuel cell vehicle from a normal operating mode to a hot operating mode, wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature.

The processing circuitry of the control system is configured to determine a required value of a traction power from the fuel cell system for the fuel cell vehicle; determine a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output; and, when the fuel cell vehicle is operated in the normal operating mode and the required value of the traction power is above a first fuel cell system output level threshold, control the fuel cell vehicle to transition from the normal operating mode to the hot operating mode by increasing the net electric power output value to a second fuel cell system output level threshold, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

The first aspect of the disclosure may seek to control a fuel cell power during the hot operating mode of the fuel cell vehicle in which the temperature of the coolant is increasing to increase an amount of traction power that the fuel cell system may provide. A technical benefit may include improved performance of the fuel cell vehicle at portions of a route where increased power may be requested from the fuel cell system, whereby the overall performance of the fuel cell vehicle is improved. As another technical benefit, a higher operating temperature may allow a higher heat transfer in the cooling system, whereby a required cooling electrical power, e.g. a cooling fan power, may be reduced which improves fuel consumption. The cooling system may be able to handle a higher heat transfer amount, such that a higher heat load can be handled at higher coolant temperatures. An accurate control of the fuel cell vehicle may be achieved while efficiency of the fuel cell vehicle is improved, due to the fuel cell system being controlled to provide sufficient power while not going above a point where further increase in a fuel cell system power output is counterproductive.

In some examples, the processing circuitry may be configured to, when the fuel cell vehicle is operated in the normal operating mode, control the fuel cell vehicle to transition from the normal operating mode to the hot second operating mode via a fast transition mode, by controlling the fuel cell vehicle to: decrease the cooling electrical power by a certain value while maintaining the fuel cell system power output constant to increase the coolant inlet temperature; adjust the fuel cell power output and/or the cooling electrical power until the coolant inlet temperature reaches the hot coolant temperature; and after the coolant inlet temperature has reached the hot coolant temperature, adjust the fuel cell system power output and/or the cooling electrical power until the net electric power output value reaches the second fuel cell system output level threshold.

In some examples, the processing circuitry may be configured to, when the fuel cell vehicle is operated in the normal operating mode, control the fuel cell vehicle to transition from the normal operating mode to the hot second operating mode via a normal transition mode, by controlling the fuel cell vehicle to: increase the fuel cell system power output while maintaining the cooling electrical power constant to increase the coolant inlet temperature; adjust the fuel cell power output and/or the cooling electrical power until the coolant inlet temperature reaches the hot coolant temperature; and, after the coolant inlet temperature has reached the hot coolant temperature, adjust the fuel cell system power output and/or the cooling electrical power until the net electric power output value reaches the second fuel cell system output level threshold.

In some examples, the processing circuitry may be configured to control the fuel cell vehicle to adjust the fuel cell power output and/or the cooling electrical power, until the coolant inlet temperature reaches the hot coolant temperature, by controlling the fuel cell vehicle to, when the coolant inlet temperature is below the hot coolant temperature, increase the fuel cell power output; when the coolant inlet temperature is above the hot coolant temperature and the cooling electrical power is below a target cooling electrical power value corresponding to the second fuel cell system output level threshold, increase the cooling electrical power until the cooling electrical power reaches the target cooling electrical power value; and, when the coolant inlet temperature is above the hot temperature threshold and the cooling electrical power is at the target cooling electrical power value, decrease the fuel cell power output.

In some examples, the processing circuitry may be configured to, when the fuel cell vehicle is operated in the normal operating mode, control the fuel cell vehicle to transition from the normal operating mode to the hot second operating mode via a conservative transition mode, by controlling the fuel cell vehicle to: increase the fuel cell system power output; simultaneously with increasing the fuel cell system power output, increase the cooling electrical power until the cooling electrical power reaches the target cooling electrical power value; and when the cooling electrical power has reached the target cooling electrical power value, increase the fuel cell system power output until the coolant inlet temperature is equal the hot coolant temperature and the net electric power output value reaches the second fuel cell system output level threshold, while keeping the cooling electrical power constant once the cooling electrical power has reached the target cooling electrical power value.

In some examples, the processing circuitry may be configured to, for the fuel cell vehicle operated in the normal operating mode, determine and/or obtain the first fuel cell system output level threshold for the fuel cell system, the first fuel cell system output level threshold being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

In some examples, the processing circuitry may be configured to, for the fuel cell vehicle operated in the hot operating mode, determine and/or obtain the second fuel cell system output level threshold for the fuel cell system, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

According to a second aspect of the disclosure, a fuel cell vehicle is provided that comprises a control system in accordance with the first aspect of the disclosure.

The second aspect of the disclosure may seek to control a fuel cell power during the hot operating mode of the fuel cell vehicle in which the temperature of the coolant is increasing to increase an amount of traction power that the fuel cell system may provide. A technical benefit may include improved performance of the fuel cell vehicle at portions of a route where increased power may be requested from the fuel cell system, thereby the overall performance of the fuel cell vehicle is improved. As another technical benefit, a higher operating temperature may allow a higher heat transfer in the cooling system, whereby a required cooling electrical power, e.g. a cooling fan power, may be reduced which improves fuel consumption. A fine control of the fuel cell vehicle may be achieved while efficiency of the fuel cell vehicle is improved, due to the fuel cell system being controlled to provide as much power as possible while not going above a point where further increase in a fuel cell system power output is counterproductive.

According to a third aspect of the disclosure, a method for controlling transition of a fuel cell vehicle from a normal operating mode to a hot operating mode is provided. The fuel cell vehicle comprises a fuel cell system comprising a fuel cell stack configured to generate power by electrochemical reaction, and a cooling system configured to circulate a coolant through the fuel cell system to dissipate heat generated by the fuel cell system. In the normal operating mode, a coolant inlet temperature of the coolant at a coolant inlet of the fuel cell stack comprises a normal coolant temperature, and, in the hot operating mode the coolant inlet temperature at the coolant inlet of the fuel cell stack comprises a hot coolant temperature, and wherein the hot coolant temperature is higher than the normal coolant temperature. In the normal operating mode, a target coolant inlet temperature for the coolant inlet temperature of the coolant at a coolant inlet of the fuel cell stack comprises or is set to the normal coolant temperature, and, in the hot operating mode, the target coolant inlet temperature comprises or is set to the hot coolant temperature.

The method comprises determining a required value of a traction power from the fuel cell system for the fuel cell vehicle; determining a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output; and, when the fuel cell vehicle is operated in the normal operating mode and the required value of the traction power is above the first fuel cell system output level threshold, controlling the fuel cell vehicle to transition from the normal operating mode to the hot operating mode by increasing the net electric power output value to a second fuel cell system output level threshold, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

The third aspect of the disclosure may seek to control a fuel cell power during the hot operating mode of the fuel cell vehicle in which the temperature of the coolant is increasing to increase an amount of traction power that the fuel cell system may provide. A technical benefit may include improved performance of the fuel cell vehicle at portions of a route where increased power may be requested from the fuel cell system, thereby the overall performance of the fuel cell vehicle is improved. As another technical benefit, a higher operating temperature may allow a higher heat transfer in the cooling system, whereby a required cooling electrical power, e.g. a cooling fan power, may be reduced which improves fuel consumption. A fine control of the fuel cell vehicle may be achieved while efficiency of the fuel cell vehicle is improved, due to the fuel cell system being controlled to provide as much power as possible while not going above a point where further increase in a fuel cell system power output is counterproductive.

In some examples, the method may comprise, when the fuel cell vehicle is operated in the normal operating mode, controlling the fuel cell vehicle to transition from the normal operating mode to the hot second operating mode via a fast transition mode, by controlling the fuel cell vehicle to: decrease the cooling electrical power by a certain value while maintaining the fuel cell system power output constant to increase the coolant inlet temperature; adjust the fuel cell power output and/or the cooling electrical power until the coolant inlet temperature reaches the hot coolant temperature; and after the coolant inlet temperature has reached the hot coolant temperature, adjust the fuel cell system power output and/or the cooling electrical power until the net electric power output value reaches the second fuel cell system output level threshold.

In some examples, the method may comprise, when the fuel cell vehicle is operated in the normal operating mode, controlling the fuel cell vehicle to transition from the normal operating mode to the hot second operating mode via a normal transition mode, by controlling the fuel cell vehicle to: increase the fuel cell system power output while maintaining the cooling electrical power constant to increase the coolant inlet temperature; adjust the fuel cell power output and/or the cooling electrical power until the coolant inlet temperature reaches the hot coolant temperature; and, after the coolant inlet temperature has reached the hot coolant temperature, adjust the fuel cell system power output and/or the cooling electrical power until the net electric power output value reaches the second fuel cell system output level threshold.

In some examples, the method may comprise controlling the fuel cell vehicle to adjust the fuel cell power output and/or the cooling electrical power, until the coolant inlet temperature reaches the hot coolant temperature, by: when the coolant inlet temperature is below the hot coolant temperature, increasing the fuel cell power output; when the coolant inlet temperature is above the hot coolant temperature and the cooling electrical power is below a target cooling electrical power value corresponding to the second fuel cell system output level threshold, increasing the cooling electrical power until the cooling electrical power reaches the target cooling electrical power value; and when the coolant inlet temperature is above the hot temperature threshold and the cooling electrical power is above the target cooling electrical power value, decreasing the fuel cell power output.

In some examples, the method may comprise, when the fuel cell vehicle is operated in the normal operating mode, controlling the fuel cell vehicle to transition from the normal operating mode to the hot second operating mode via a conservative transition mode, by controlling the fuel cell vehicle to: increase the fuel cell system power output until the coolant inlet temperature is equal to the hot coolant temperature; simultaneously with increasing the fuel cell system power output, increase the cooling electrical power until the cooling electrical power reaches the target cooling electrical power value, and keep the cooling electrical power constant once the cooling electrical power has reached the target cooling electrical power value; and when the coolant inlet temperature is equal to the hot coolant temperature and the cooling electrical power has reached the target cooling electrical power value, increase the fuel cell system power output until the net electric power output value reaches the second fuel cell system output level threshold.

In some examples, the method may comprise, for the fuel cell vehicle operated in the normal operating mode, determining and/or obtaining a first fuel cell system output level threshold for the fuel cell system, the first fuel cell system output level threshold being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

According to a fourth aspect of the disclosure, a computer program product is provided that comprises computer-executable instructions, which, when executed by processing circuitry, cause the processing circuitry to perform a method in accordance with any one or more examples of the present disclosure.

Advantages and effects of the computer program are largely analogous to the advantages and effects of the method according to the examples herein. Further, all embodiments of the method are applicable to and combinable with all embodiments of the computer program according to the examples herein, and vice versa.

According to a fifth aspect of the disclosure, a computer-readable storage medium is provided that comprises computer-executable instructions, which, when executed by processing circuitry, cause the processing circuitry to perform a method in accordance with any one or more examples of the present disclosure.

Advantages and effects of the computer-readable storage medium are largely analogous to the advantages and effects of the method according to the examples herein. Further, all embodiments of the method are applicable to and combinable with all embodiments of the computer-readable storage medium according to the examples herein, and vice versa.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** illustrates a side view of an example of a fuel cell vehicle in which a method in accordance with an example of aspects of the present disclosure may be implemented.
**FIG. 2** is a block diagram illustrating an example of components of the fuel cell vehicle of FIG. 1, according to an example.
**FIG. 3** is a diagram illustrating a fuel cell system efficiency and fuel cell system heat rejection to a coolant of a cooling system as a function of a fuel cell system power output, according to an example.
**FIG. 4** is a diagram illustrating a net electric power output of the fuel cell system as a function of a fuel cell system power output, according to an example.
**FIG. 5** is a diagram illustrating an example of causing the fuel cell vehicle to transition from the normal operating mode to the hot operating mode, wherein the net electric power output is shown as a function of the cooling electrical power, according to an example.
**FIGs. 6A****,** **6B****,** and **6C** are flowcharts illustrating a method for controlling transition of a fuel cell vehicle from a normal operating mode to a hot operating mode of the fuel cell vehicle, according to an example.
**FIG. 7** is a schematic diagram of a computer system for implementing examples disclosed herein, according to an example.

### DETAILED DESCRIPTION

A fuel cell system in a fuel cell vehicle such as a fuel cell electric vehicle (FCEV) may generate large amounts of heat which makes it challenging to maintain a temperature of the fuel cell system, particularly at high ambient temperatures. Performance of the fuel cell vehicle during periods of increased demands on the fuel cell system may be improved by temporarily increasing a coolant temperature of a coolant circulating in a cooling system of the fuel cell vehicle. Increasing the coolant temperature, which is performed by increasing a target coolant inlet temperature for a coolant inlet temperature of the coolant at the coolant inlet of fuel cell stack of the fuel cell system, may help managing heat generated by the fuel cell system, because when the coolant temperature is increasing, more heat can be added to the coolant than is removed by the cooling system. Another benefit is that, as the coolant temperature increases, an efficiency of the cooling system may increase, which makes it possible to increase an amount of power that is available for a vehicle's propulsion/traction system.

However, the coolant temperature in the cooling system can only be increased to a certain extent. Controlling the fuel cell vehicle as it transitions to assume or operate in what is referred to herein as a hot operating mode may be a challenging task.

Accordingly, techniques in accordance with examples of the present disclosure provide a method for controlling the fuel cell vehicle, such as the fuel cell system and the cooling system of the fuel cell vehicle, during transition from a normal operating mode to the hot operating mode, when the coolant temperature increases, to provide requested power for driving the fuel cell vehicle, in an efficient manner. The fuel cell vehicle may be requesting an amount of power from the fuel cell system of the fuel cell vehicle that the fuel cell system may not be able to provide in the normal operating mode, and a transition of the vehicle to assume the hot operating mode may be required. A type of the hot operating mode which the fuel cell vehicle may assume may be referred to as a power operating mode, to indicate that the purpose is to receive increased amounts of power from the fuel cell system. Thus, the amount of power that the fuel cell vehicle receives, e.g. to drive the fuel cell vehicle and/or to power one or more power take-off or other devices associated with the fuel cell vehicle, may be increased. The control of the fuel cell vehicle is performed by adjusting a fuel cell system power output and/or a cooling electrical power to cause the vehicle to transition to the hot operating mode so that more power is provided to the vehicle as compared to an amount of power that would be available in the normal operating mode.

In some examples, in the hot operating mode of the fuel cell vehicle, a target coolant inlet temperature of the coolant passing through the cooling system comprises, e.g., may be set to, the hot coolant temperature. In the normal operating mode of the fuel cell vehicle, the target coolant inlet temperature of the coolant passing through the cooling system comprises, e.g., may be set, to a normal coolant temperature, wherein the hot coolant temperature is higher than the normal coolant temperature. The increase in the target coolant inlet temperature is followed by an increase in an actual coolant inlet temperature, and the fuel cell vehicle may assume the hot operating mode once the coolant inlet temperature reaches or becomes equal to the target coolant inlet temperature set to the hot coolant temperature.

Thus, controlling the fuel cell vehicle to transition from the normal operating mode to the hot operating mode involves controlling the fuel cell vehicle so that the target coolant inlet temperature is increased, whereby the actual coolant inlet temperature is increased above the normal coolant temperature to ultimately reach a value of the hot coolant temperature. The control in accordance with examples of the present disclosure may involve controlling a fuel cell system power and/or controlling a cooling electrical power that is electrical power required to be supplied by the fuel cell system to the cooling system for rejecting output heat that is generated at least by the fuel cell system.

In some examples, during a transition or shift or switch from the normal operating mode to the hot operating mode, the fuel cell vehicle is controlled such that the net electric power output value is increased from a first fuel cell system output level threshold to a second fuel cell system output level threshold, wherein the second fuel cell system output level threshold which is a point of maximum or highest traction power at which the fuel cell vehicle is allowed to operate. In this way, more power may be provided by the fuel cell system.

In some examples, the net electric power output value may be determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output. In some examples, the net electric power output value may be determined by determining a difference between the fuel cell system power output and the cooling electrical power value.

In some examples, the first fuel cell system output level threshold may be such that, when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold. In other words, in the normal operating mode, it may be counterproductive to increase a fuel cell system power output to above the first fuel cell system output level threshold, because the generated power would be spent on cooling generated heat, i.e. on powering the cooling system of the fuel cell vehicle. Similarly, the second fuel cell system output level threshold may be such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

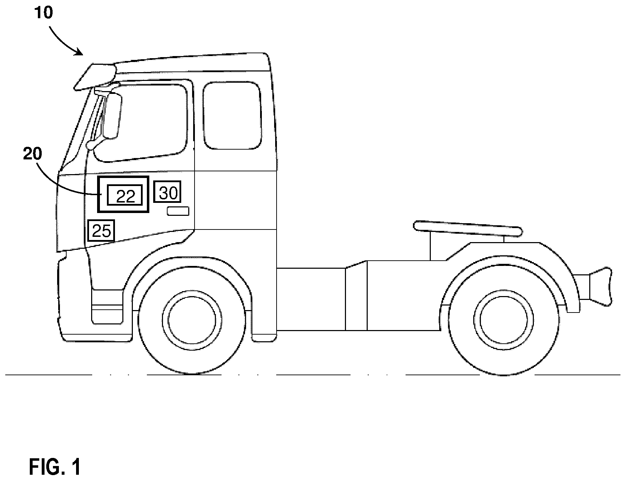

**FIG. 1** depicts a side view of a fuel cell vehicle 10 according to an example of the present disclosure. The fuel cell vehicle 10 is shown as a truck, such as a heavy-duty truck for towing one or more trailers (not shown). The fuel cell vehicle 10 may be a fuel cell electric vehicle (FCEV) or a hybrid vehicle comprising at least one fuel cell system. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the fuel cell vehicle 10 comprises a fuel cell system 20, which may comprise one or more fuel cell systems. The fuel cell system 20 may be used for powering one or more electric drive motors which are used for creating a propulsion force to the fuel cell vehicle 10. The fuel cell system 20 may additionally be used for powering other electric power consumers (not shown) of the fuel cell vehicle 10, such as an electric motor for a crane, an electric motor for a refrigerator system, an electric motor for an air conditioning system, an electric motor for an electric heater, or any other electric power consuming function of the fuel cell vehicle 10. The fuel cell system 20 may be used for powering one or more power take-off (PTO) devices that are devices that transfer an electric motor's mechanical power to another piece of equipment.

The fuel cell system 20 comprises two or more fuel cells which together form a fuel cell stack 22 as shown schematically in FIG. 1. In examples herein, the fuel cell system 20 may comprise multiple fuel cell stacks 22, and any mention of the fuel cell stack 22 may apply to two or more fuel cell stacks.

As also shown in FIG. 1, the fuel cell vehicle 10 comprises a cooling system 25 configured to pass a coolant through the fuel cell stack 22 of the fuel cell system 20 to dissipate heat generated by the fuel cell system 20 e.g. the fuel cell stack 22.

The fuel cell system 20 may include various components which are not shown herein. The fuel cell system 20 may comprise multiple fuel cell systems, and each fuel cell system may comprise its own control system, which may be communicatively connected to a controller or control unit.

The fuel cell vehicle 10 further comprises a control device or control system 30 configured to control the fuel cell vehicle 10 in accordance with an example. The control system 30 may be e.g. a vehicle controller. The control system 30 may control a fuel cell controller e.g. fuel cell control unit (FCCU) configured to manage and control hydrogen and air processing, thermal and water management, and energy conversion in the fuel cell system 20. The control system 30 may in some examples comprise the fuel cell controller or control unit.

The control system 30 may be an on-board control system as shown in FIG. 1. It shall be understood that the control system 30 may also be a remote control system such as an off-board control system, or a combination of an on-board and off-board control system or systems.

The control system 30 may be configured to communicate with components of the fuel cell vehicle 10, e.g., the fuel cell system and the cooling system, by issuing control instructions or signals and by receiving status information relating to operation of the components. The control system 30 may be configured to receive information from various sensors, including one or more of temperature sensors, voltage sensors, moisture sensors, and other sensors included in or associated with the cooling system 25, the fuel cell system 20, and/or other components of the fuel cell vehicle 10. For example, one or more temperature sensors may be positioned such that they can acquire measurements of a temperature of the coolant in the cooling system 25. For example, a temperature sensor may measure an inlet coolant temperature of the coolant in the cooling system 25, at a coolant inlet of the fuel cell stack 22. Another temperature sensor may measure an outlet coolant temperature of the coolant in the cooling system 25, at a coolant outlet of the fuel cell stack 22.

The control system 30 may acquire data on a current location of the fuel cell vehicle 10, e.g. using a Global Positioning System (GPS) system. The control system 30 may be communicatively coupled to an internal database, an external database, or a combination thereof, to receive data related to a route traveled or to be traveled by the vehicle. The data related to the route may include a start point, an end point, and a path between the start and end points that is being traveled or expected to be traveled by the fuel cell vehicle 10. The control system 30 may store and/or may have access to data related to the route including terrain information e.g. inclination, altitude, speed limits, obstacles, etc. The control system 30 may also receive real-time, or close-to-real-time, information on the route including a traffic congestion, accident reports, road closures, construction, etc. The control system 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The control system 30 may further receive data from a weather service which may include data on actual and predicted ambient conditions and other types of data.

In some examples, the control system 30 may be an electronic control unit and may comprise processing circuitry which is adapted to execute a computer program comprising computer-executable instructions to perform a method according to aspects and examples of the present disclosure. The control system 30 may comprise hardware, firmware, and/or software for performing the methods according to aspects and examples of the present disclosure. The control system 30 may be denoted a computer. The control system 30 may be constituted by one or more separate sub-units, and the control system 30 may communicate by use of wired and/or wireless communication technology.

The fuel cell vehicle 10 comprises various other components not shown in FIG. 1.

Although the present disclosure is described with respect to a fuel cell vehicle such as a truck, aspects of the present disclosure are not restricted to this particular vehicle, but may also be used in other fuel cell vehicles such as passenger cars, off-road vehicles, aircrafts and marine vehicles. The present disclosure may also be applied in vessels and in stationary applications, such as in grid-connected supplemental power generators or in grid-independent power generators.

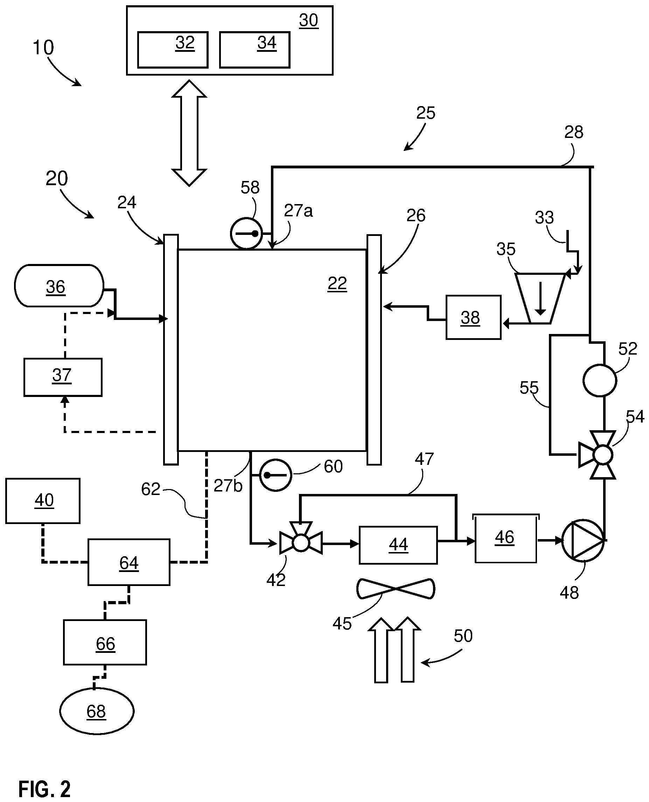

**FIG. 2** further illustrates an example of the fuel cell vehicle 10 comprising the fuel cell system 20, the cooling system 25, and the control system 30, among other components. As shown, the fuel cell system 20 comprises a fuel cell stack 22 comprising an anode side or anode 24, a cathode side or cathode 26, and an electrolyte (not shown) such as e.g. a proton exchange membrane (PEM) sandwiched between the anode 24 and the cathode 26.

The fuel cell stack 22, which may comprise two or more stacks, is configured to receive hydrogen fuel and oxidant such as air or oxygen, and to generate electric energy or power through an electrochemical reaction between the hydrogen and the oxidant.

The fuel cell system 20 comprises a hydrogen supply system configured to supply hydrogen to the anode 24 and an oxygen supply system configured to supply air or oxygen to the cathode 26. The anode 24 receives fuel such as hydrogen, via the hydrogen supply system, that can be supplied from a hydrogen storage device 36 e.g. a hydrogen container or tank. Any suitable source of hydrogen can be used. In some implementations, as shown in FIG. 2, a hydrogen recirculation blower 37 may be provided at an anode outlet of the fuel cell stack 22 such that unreacted hydrogen of the anode, that is remaining after the electrochemical reaction at the fuel cell stack 22, may be supplied back to the anode. In this way, the unused hydrogen may be reused. The hydrogen recirculation blower 37 may be part of a hydrogen recirculation system of the fuel cell system 20. The fuel cell system 20 may include other systems, sub-systems, or units.

The cathode 26 is configured to receive, via an oxygen supply system, air from the ambient environment, as shown by an arrow 33. The ambient air is pressurized by an air compressor 35. The compressed air may be humidified by a humidifier 38. The air compressor 35 may be electrically driven and it may in some examples comprise an electric turbocharger (ETC) comprising a turbine and a compressor.

As shown in FIG. 2, the fuel cell vehicle 10 comprises an electrical storage system (ESS) 40 such as e.g. one or more batteries and/or one or more supercapacitors for storing electric energy, including excess electric energy produced by the fuel cell system 20. The ESS 40 may store energy generated by regenerative braking. The ESS 40 is configured to assist the fuel cell system 20 in supplying energy to an electric drive motor of the fuel cell vehicle 10, to meet power/energy demands of the fuel cell vehicle 10. The fuel cell system 20 and the ESS 40 can provide power to one or more auxiliary systems and devices of the fuel cell vehicle 10.

The cooling system 25 of the fuel cell vehicle 10 is configured to dissipate heat produced as a result of operation of at least the fuel cell system 20, such as the electrochemical reaction in the fuel cell stack 22. The cooling system 25 is configured to pass the coolant through the fuel cell stack 22 to dissipate heat generated by the fuel cell stack 22.

In the example shown in FIG. 2, the cooling system 25 comprises a cooling circuit 28 configured to regulate the temperature of the fuel cell stack 22. The cooling circuit 28 circulates a coolant therein such that the coolant flows into the fuel cell stack 22 via a coolant inlet 27a and flows out of the fuel cell stack 22 via a coolant outlet 27b.

As shown in FIG. 2, the cooling circuit 28 may comprise a radiator 44, a coolant tank 46 for storing the coolant, a coolant pump 48 circulating the coolant, and a heater 52. The radiator 44 is configured and arranged so as to cool down the fuel cell stack 22. The radiator 44 may be in the form of a heat discharger that discharges heat to the outside environment by exchanging heat between the coolant and the outside environment i.e. external air schematically shown by arrows 50. The radiator 44 includes or is associated with a heat exchanger fan 45, also referred to herein as a cooling fan or a blower, that is configured to operate to supply cooling air to the radiator 44 and dissipate heat, to thereby regulate a temperature of the coolant.

The cooling fan 45 and the coolant pump 48 may be referred to as auxiliary cooling devices that are arranged and configured to assist in circulating the coolant in the cooling circuit 28 of the cooling system 25.

In some examples, the cooling circuit 28 may comprise a bypass valve 42 that is configured to be controlled to allow the coolant to flow to a bypass passage 47 through which the coolant flows by bypassing the radiator 44. The cooling circuit 28 may also comprise a bypass valve 54 that is configured to be controlled to allow the coolant to flow to a bypass passage 55 through which the coolant flows by bypassing the heater 52.

As further shown in FIG. 2, the fuel cell system 20 and/or the cooling system 25 comprise a first temperature sensor 58 configured to acquire measurements of a coolant temperature, also referred to as a coolant inlet temperature, at the coolant inlet 27a of the fuel cell stack 22. A second temperature sensor 60 may be used to acquire measurements of a coolant temperature referred to as a coolant outlet temperature, at the coolant outlet 27b of the fuel cell stack 22. The fuel cell system 20 and/or the cooling system 25 may comprise other temperature sensors.

The heater 52 may be used, e.g, in start-up conditions in cold climates or in other situations. In some implementations, the heater may be absent, and, e.g. a power of operation of the cooling fan 45 may be controlled to adjust the coolant temperature at the coolant inlet 27a of the fuel cell stack 22 in accordance with the target coolant inlet temperature set by the control system 30.

In the example of FIG. 2, electric power, shown schematically with a dashed line and labeled as 62, generated by the fuel cell stack 22 may be supplied to a junction box or unit 64, such as e.g. a high-voltage junction box. The power may be supplied to the junction unit 64 through a converter. The power may be supplied, via the junction unit 64, to an electric motor 66, also referred to as an electric traction motor or machine, for propelling one or more sets of wheels 68 of the vehicle 10. The power may also be supplied, via the junction unit 64, to the ESS 40. The junction unit 64 is a component that serves as a communal meeting spot for electrical connections between the fuel cell stack 22, the ESS 40, and the electric motor 66.

It should be appreciated that the components illustrated in FIG. 2 are shown as an example, since components may be arranged in other ways, and additional or alternative components can be included in the fuel cell vehicle 10 and in the fuel cell system 20 and the cooling system 25. For example, more than one heat exchanger fan and/or more than one pump may be employed.

Regardless of the specific implementation of the fuel cell stack 22 and the cooling system 25, a temperature of the coolant circulating through the cooling circuit 28 can be decreased or increased in dependence on the control performed by the control system 30. As shown in FIG. 2, the control system 30 comprises processing circuitry 32 and non-transitory tangible memory 34 configured to store computer-executable instructions that, when executed by the processing circuitry 32, perform control of the fuel cell vehicle 10 in accordance with examples of the present disclosure.

In some examples, the processing circuitry 32 may be configured to control operation of the fuel cell vehicle 10 by providing one or more instructions to the fuel cell vehicle 10 such as suitable components of the fuel cell vehicle 10 to transition or switch the fuel cell vehicle 10 from operating in the normal operating mode to operating in the hot operating mode. The fuel cell vehicle 10 may assume the hot operating mode as a result of the transition.

The cooling power consumption or the cooling electrical power may set a limit on a maximum traction power available to propel the fuel cell vehicle.

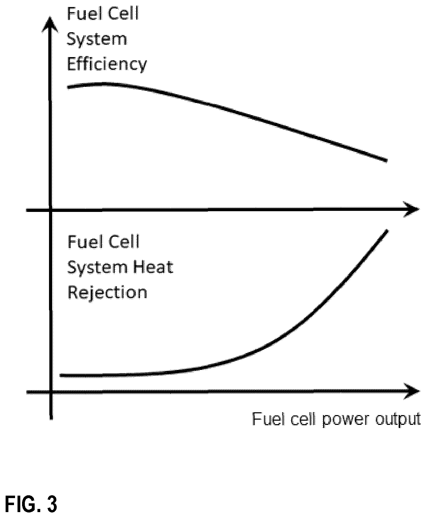

As shown schematically in **FIG. 3****,** a fuel cell system efficiency may decrease with an increase in the fuel cell power output. This occurs because, as the fuel cell power output increases, an amount of output heat that is generated by the fuel cell system when operating so as to produce the fuel cell system power output, increases. Thus, heat rejection by the fuel cell system, to the coolant circulating in the cooling system, increases. Accordingly, to increase the fuel cell system power output, more heat needs to be dispersed by the cooling system, e.g., to the ambient environment, in order to maintain a desired temperature of the fuel cell system. The cooling electrical power, which may also be referred to as a cooling auxiliary power, may be required, e.g., by at least one auxiliary cooling device of the cooling system comprising, e.g., the cooling fan 45 and the coolant pump 48 shown in FIG. 2, which may be referred to as auxiliary cooling devices. In some examples, the at least one auxiliary cooling device may additionally include an air compressor and/or other devices. Depending on an implementation of the cooling system in a fuel cell vehicle, various devices may be considered to be auxiliary cooling devices that facilitate circulation of the coolant through the cooling system.

Efficiency of the cooling system decreases after a certain point, due to the cooling system having a certain capacity in terms of heat dissipation, which capacity is not unlimited. Thus, in order to be able to reject more heat in the cooling system, the cooling electrical power needs to be increased in order to run the at least one auxiliary cooling device at higher power levels. The increase in the amount of the cooling electrical power required to be supplied by the fuel cell system to the cooling system, in turn, leads to increased costs of the cooling electrical power.

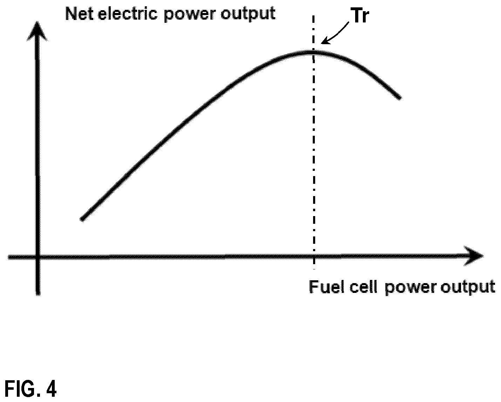

As the fuel cell system power output increases, the heat rejection demand also increases. At a certain point, an amount of the cooling electrical power required to disperse the heat generated by the fuel cell system becomes so high that increasing values of the fuel cell system power output becomes futile or ineffective. This is due to the fact that the additional fuel cell system power is only used as the cooling electrical power, to run the at least one auxiliary cooling device. Instead of supplying power to an electric power consumer e.g. an electric motor of a fuel cell vehicle, the fuel cell system power output is used to operate the at least one auxiliary cooling device. Accordingly, requesting higher values of the fuel cell system power output beyond a certain point may be counterproductive since a net electric power output is decreased even though the fuel cell system power output increases, as shown schematically in **FIG. 4****.** Thus, beyond the certain point, shown in FIG. 4 as an operating threshold point Tr, selected among multiple fuel cell system outputs, a net electric power output, which would be available e.g. to drive the vehicle forward and/or to charge the ESS, will decrease. The operating threshold point Tr may be referred to as a fuel cell system output level threshold.

Accordingly, for any given ambient conditions, air density, a speed of the fuel cell vehicle, and a coolant temperature, a fuel cell system output level threshold can be determined for the fuel cell system. The fuel cell system output level threshold is such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output exceeding the fuel cell system output level threshold. Furthermore, the fuel cell system power output may be limited so that it does not exceed the fuel cell system output level threshold, wherein the fuel cell system output level threshold is a value beyond which an increase in the fuel cell system power output will lead to a reduction in the net electric power output available to a consumer, e.g. to drive the fuel cell vehicle, charge the ESS, and/or to power a PTO device associated with the vehicle.

The fuel cell system output level threshold may be determined by determining the cooling electrical power required for consumption by least one auxiliary cooling device at each level of the fuel cell system output power. The level of the fuel cell system output power may depend on a total electric power produced by the fuel cell stack minus power used to operate at least one fuel cell system auxiliary device such as e.g., an air compressor, a humidifier, a hydrogen recirculation blower, and/or any other device.

The fuel cell system output level threshold may vary depending on a coolant temperature, because the efficiency of the cooling system changes with coolant temperature. Accordingly, by increasing the coolant temperature, it may be possible to increase the fuel cell system output level threshold thereby increasing the net electric power output by the fuel cell system.

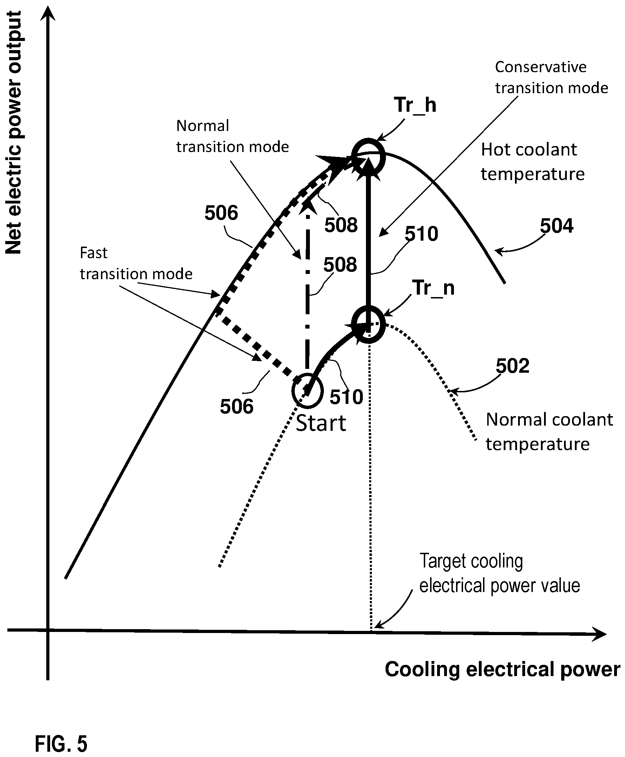

**FIG. 5** is a schematic illustration of an example of techniques in accordance with examples of the present disclosure for causing the fuel cell vehicle to transition from the normal operating mode to the hot operating mode, wherein the net electric power output is shown as a function of the cooling electrical power. The control system may decide to instruct the fuel cell vehicle to transition to the hot operating mode when the fuel cell vehicle is climbing or is predicted to climb a steep hill, or when the fuel cell vehicle is traveling or approaching any part of the route requiring higher power, e.g. due to a load carried by the vehicle, a certain legal speed at the route, and/or other factors.

A graph 502, shown by a dotted line, illustrates the net electric power output as a function of the cooling electrical power for the normal operating mode i.e. at a normal coolant temperature. A fuel cell system output level threshold, also referred to herein as a first fuel cell system output level threshold, for the normal operating mode of the fuel cell vehicle is shown as an operating point Tr_n in FIG. 5.

The efficiency of the cooling system may be increased by increasing the coolant temperature, and a graph 504, shown by a solid line, illustrates the net electric power output as a function of the cooling electrical power for the hot operating mode i.e. at a hot coolant temperature. A fuel cell system output level threshold, also referred to herein as a second fuel cell system output level threshold, for the hot operating mode of the fuel cell vehicle is shown as an operating point Tr_h in FIG. 5. The operating point Tr_h may also be referred to as an optimum power mode operating point, meaning that, at this operating point, the increased amount of power is generated by the fuel cell system in an efficient manner, such that increasing the fuel cell system output power above this point would lead to a reduction in the net electric power output. A value of the cooling electrical power that corresponds to the operating point Tr_h in the hot operating mode may be referred to herein as a target cooling electrical power or a target cooling electrical power value as shown in FIG. 5. A value of the fuel cell system power output that corresponds to the operating point Tr_h in the hot operating mode may be referred to herein as a target fuel cell system power output.

Thus, controlling the fuel cell system and the cooling system so that the net electric power output is at a level of the Tr_h operating point, without however exceeding this point, may ensure that the fuel cell vehicle receives an increased amount of power, sufficient to meet the higher power demands when e.g. climbing a hill or at other situations. The aim of the technique in accordance with examples of the present disclosure is to cause the fuel cell vehicle to assume the hot operating mode, such that the coolant inlet temperature comprises the hot coolant temperature, so that the net electric power output value is increased up to the second fuel cell system output level threshold. In this way, the traction power, otherwise referred to as a net electric power output, is increased.

From a starting operating point, indicated as "Start" in FIG. 5, which represents a current value of the net electric power output, the coolant inlet temperature may be increased, so that the fuel cell vehicle assumes the hot operating mode, via a fast, normal, or conservative transition modes in accordance with examples herein. For example, the fuel cell vehicle may be climbing a steep hill or approaching a steep hill, or may require higher power for other reasons e.g. a higher speed and/or a load of the vehicle, and it may be determined by the control system that it is beneficial for the vehicle to assume the hot operating mode so that the required amount of power can be provided to the vehicle. There may be various circumstances at which the fuel cell vehicle may be controlled or instructed to assume the hot operating mode.

From the starting operating point Start, the fuel cell system traction power and the cooling electrical power may be increased, e.g., simultaneously increased, to maximize a net electric power output. In accordance with examples of the present disclosure, the fuel cell vehicle may be controlled or instructed to transition from the normal operating mode, represented by the graph 502 in FIG. 5, to the hot operating mode, represented by the graph 504 in FIG. 5, via a fast transition mode, a normal transition mode, or a conservative transition mode. It should be noted that the fast, normal, and conservative transition modes are referred as such only for description purposes and not to indicate any differences in time or in other parameters between the transition modes. Nevertheless, in many circumstances, the fast transition mode may allow to transition the fuel cell vehicle so that it assumes the hot operating mode faster as compared to when the fuel cell vehicle is controlled to transition to the hot operating mode via the normal or conservative transition modes.

As shown in FIG. 5 by a fast transition mode path 506, shown by dotted lines, the fast transition mode may involve, from the starting operating point, decreasing the cooling electrical power by a certain value and keeping the cooling electrical power at lower values than at the starting operating point for a certain amount of time. As the cooling electrical power is decreased, the fuel cell system power output may be maintained or kept constant to increase the traction power or the net electric power output. The coolant inlet temperature may thus be allowed to reach the hot coolant temperature, whereby the hot operating mode has been assumed by the fuel cell vehicle. The fuel cell system power output and/or the cooling electrical power may then be adjusted until the net electric power output or the net electric power output value reaches the second fuel cell system output level threshold, shown as Tr_h in FIG. 5. A part of the path 506 that follows the graph 504 may coincide with the graph 504. In some cases, the coolant inlet temperature may overshoot a target coolant inlet temperature, in which case the cooling electrical power will need to be increased, to reduce the coolant inlet temperature.

As shown in FIG. 5 by a normal transition mode path 508, shown by dot-dashed lines, the normal transition mode may involve, from the starting operating point, increasing the fuel cell system power output while maintaining the cooling electrical power constant to increase the coolant inlet temperature, such that the coolant inlet temperature is allowed to reach the hot coolant temperature, whereby the fuel cell vehicle assumes the hot operating mode. In the normal transition mode, the coolant inlet temperature may be increased, until it reaches the hot coolant temperature, slower than in the fast operating mode. The fuel cell system power output and/or the cooling electrical power may then be adjusted until the net electric power output or the net electric power output value reaches the second fuel cell system output level threshold, shown as Tr_h in FIG. 5. As used herein, reaching a set point or value refers to becoming equal to the set value with a certain deviation, such as a deviation of ±1% or ±2% or ±3% wherein a maximum deviation may be ±3%. A part of the path 508 that follows the graph 504 may coincide with the graph 504.

As also shown in FIG. 5 by a conservative transition mode path 510, shown by solid lines, the conservative transition mode may involve, from the starting operating point, increasing the fuel cell system power output until the coolant inlet temperature is equal to the hot coolant temperature, whereby the hot operating mode has been assumed by the fuel cell vehicle. As used herein, the term "equal" allows for a certain deviation from a given value, such as a deviation of ±1% or ±2% or ±3% wherein a maximum deviation may be ±3%. Once the coolant inlet temperature reaches or is equal to the hot coolant temperature, it may be considered that the fuel cell vehicle has reached the hot operating mode. In the hot operating mode, the coolant inlet temperature may oscillate slightly in some circumstances, and the control system may adjust the coolant inlet temperature to maintain it at the hot operating mode.

Simultaneously with increasing the fuel cell system power output, the cooling electrical power may be increased until the cooling electrical power reaches the target cooling electrical power value. When the cooling electrical power has reached the target cooling electrical power value, the fuel cell system power output may be increased until the coolant inlet temperature is equal the hot coolant temperature and the net electric power output value reaches the second fuel cell system output level threshold, while keeping the cooling electrical power constant once the cooling electrical power has reached the target cooling electrical power value. In the conservative transition mode, it may take longer for the fuel cell vehicle to assume the hot operating mode as compared to the fast and normal transition modes.

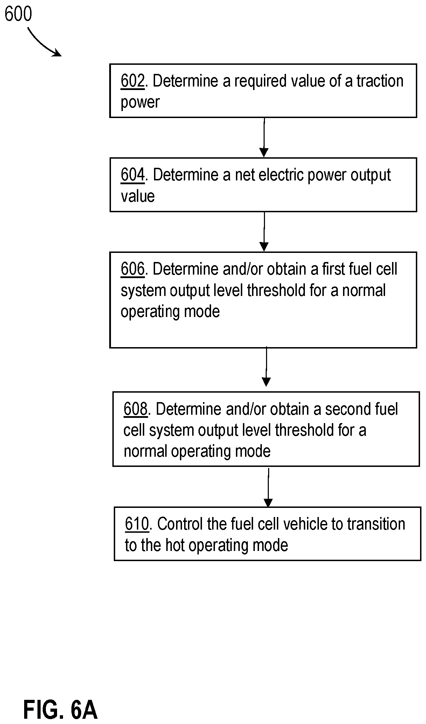

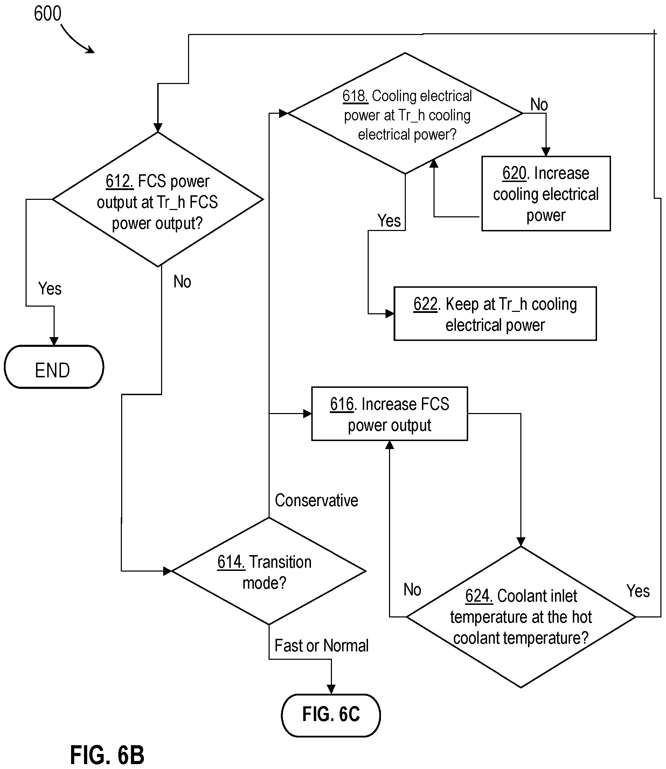

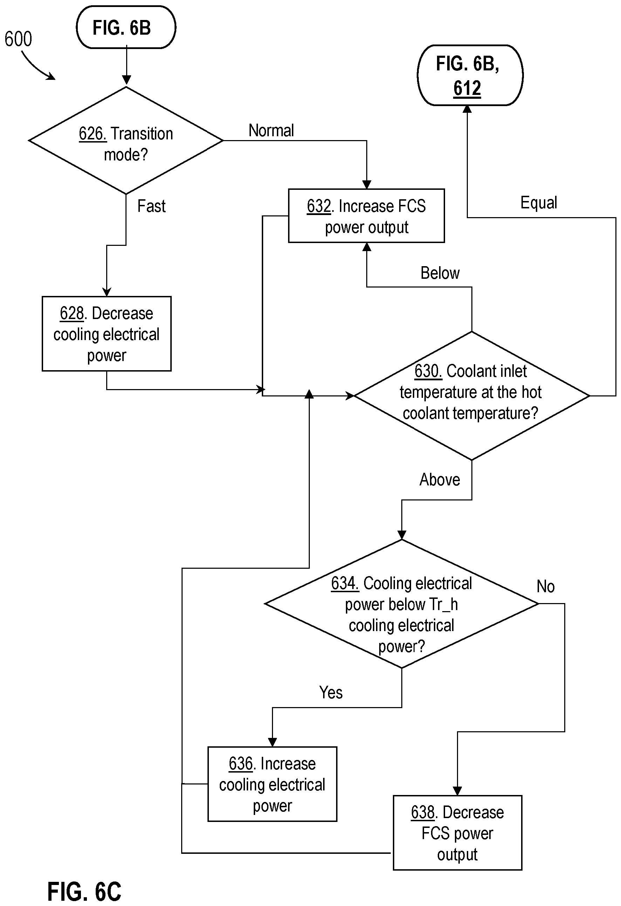

**FIGs. 6A****,** **6B****,** and **6C** are flowcharts illustrating a process or method 600 of controlling operation of a fuel cell vehicle in accordance with examples of the present disclosure. The fuel cell vehicle may be, e.g., fuel cell vehicle 10. As used herein, controlling the fuel cell vehicle to transition from operating or being operated in the normal operating mode to operating or being operated in or assuming the hot operating mode may involve instructing the fuel cell vehicle, e.g., by the control system, to perform certain actions. Controlling or instructing the fuel cell vehicle may comprise controlling or instructing one or more components, devices, or systems of the fuel cell vehicle, such as the fuel cell system, the cooling system, and others. It should be noted, although a specific order of actions of the process or method 600 is shown, the order of the actions may differ. Two or more actions may be performed concurrently or with partial concurrence.

The method 600 involves controlling transition of the fuel cell vehicle from the normal operating mode to the hot operating mode comprising the power operating mode. The fuel cell vehicle comprises a fuel cell system comprising a fuel cell stack configured to generate power by electrochemical reaction, and a cooling system configured to circulate a coolant through the fuel cell system to dissipate heat generated by the fuel cell system. The cooling system is configured such that the coolant enters the fuel cell stack at a coolant inlet. In the normal operating mode, a target coolant inlet temperature of the coolant at the coolant inlet of the fuel cell stack comprises or is set to a normal coolant temperature. In the hot operating mode, the target coolant inlet temperature of the coolant inlet temperature at the coolant inlet of the fuel cell stack comprises or is set to a hot coolant temperature, wherein the hot coolant temperature is higher than the normal coolant temperature. Thus, to switch or transition to the hot operating mode, the target coolant inlet temperature is increased which results in the increase in the actual coolant inlet temperature at the coolant inlet of the fuel cell stack. Once the actual coolant inlet temperature reaches the target coolant inlet temperature i.e. the hot coolant temperature, the fuel cell vehicle may be said to have transitioned to or assumed the hot operating mode.

The power operating mode is a type of the hot operating mode in which an amount of power that is requested from the fuel cell system is higher than a maximum amount that can be provided if the fuel cell vehicle is operated in the normal operating mode, such as higher than the first fuel cell system output level threshold. In the power operating mode, the fuel cell vehicle may be controlled so that the fuel cell system of the fuel cell vehicle generates increased amounts of power in an efficient manner, e.g. such that the net electric power output does not exceed the second fuel cell system output level threshold, shown by way of example as the operating point Tr_h in FIG. 5.

In some examples, the normal coolant temperature may comprise 60 °C and the hot coolant temperature may comprise 80 °C. In some examples, the normal coolant temperature may comprise 60 °C and the hot coolant temperature may comprise 75 °C. In some examples, the normal coolant temperature may comprise 60 °C and the hot coolant temperature may comprise 70 °C. In some examples, the hot coolant temperature may be selected from a range of temperatures from 70 °C to 90 °C, inclusive of 70 °C and 90 °C. The normal coolant temperature may be selected from a range of temperatures from 60 °C to 70 °C, inclusive of 60 °C and 70 °C, and in any case lower than the hot coolant temperature. It should be appreciated that the above are non-limiting examples.

The method 600 may be performed by a suitable computer system. In some examples, the method 600 may be performed by the control system 30 e.g. by the processing circuitry 32 of the control system 30.

At **block 602,** the control system determines a required value of a traction power from the fuel cell system for the fuel cell vehicle. The required value of the traction power from the fuel cell system may also be referred to as a request from the fuel cell system for a certain amount of power, to drive the fuel cell vehicle and optionally one or more auxiliary devices e.g. one or more PTO devices.

The fuel cell vehicle may be traveling a route. The route may be assigned to be fuel cell vehicle e.g. as part of a mission or an assignment. The control system may be aware of features of the route for the vehicle, such as a start or departure point, an end or destination point, and a path to be traveled by the vehicle from the start point to the end point. In some cases, the fuel cell vehicle may be part of a fleet of vehicles.

The required value of the traction power may be a required value of a current or predicted traction power. The required value of the traction power may depend on one or more of a current and/or predicted speed of the fuel cell vehicle, the route, ambient conditions, one or more characteristics of the fuel cell vehicle, and other features.

In some examples, the required value of the current or predicted traction power from the fuel cell system may not include a traction power that can be obtained from the ESS of the fuel cell vehicle. In other words, the required value of the traction power, which can also be referred to as a fuel cell system traction power request or a requested net electric power output, may indicate an amount of power that the fuel cell vehicle is requesting from the fuel cell system, after an amount of the traction power that the fuel cell vehicle can receive from the ESS has been determined by the control system. It should be noted that the required value of the traction power from the fuel cell system may be determined while taking a power capacity of the ESS into account. For instance, during a long, steep climb the power capacity of the ESS can be derated or decreased in order to not deplete ESS before reaching a top of the climb. Thus, in order to fulfill fuel cell vehicle power requirements, the required value of the traction power from the fuel cell system may be increased.

The required value of the traction power may be above a first fuel cell system output level threshold. When the fuel cell vehicle requests a power level, or the traction power from the fuel cell system, higher than can be obtained from the fuel cell system in the normal operating temperature, the control system may determine that the fuel cell vehicle needs to be transitioned to the hot operating mode.

At **block 604,** the control system determines a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output.

The net electric power output value may be determined by determining a difference between the fuel cell system power output and the cooling electrical power value. Thus, the net electric power output value may refer to an actual value of the traction power that the fuel cell system may provide.

The fuel cell system power output refers to an electric power output that may be available for use by the cooling system and one or more electric power consumers, after power requirements of the fuel cell system itself are met. The power requirements of the fuel cell system include power requirements of at least one fuel cell system auxiliary device such as e.g., one or more of the fuel cell stack, the air compressor, the humidifier, the hydrogen recirculation blower, and other components included in or associated with the fuel cell system. In examples herein, the fuel cell system power output may be determined in dependance on which one or more components, included in or associated with the fuel cell system, are considered to use a portion of the electric power produced by the fuel cell system such that the rest of the electric power produced by the fuel cell system may be available for other power consumption needs, e.g., by the cooling system and one or more electric power consumers that are separate from the fuel cell system. Thus, various components or devices may be considered to be fuel cell system auxiliary devices, and their power requirements may be accounted for as part of the fuel cell system power output.

Accordingly, the fuel cell system may be controlled to produce or generate certain fuel cell system power output, wherein the fuel cell system power output includes electric power required by one or more components included in or associated with the fuel cell system, such one or more components comprising one or more of the fuel cell stack, the air compressor, the humidifier, the hydrogen recirculation blower, and other components.

There may be different heat rejection demands for a particular fuel cell system power output. The cooling electrical power may comprise an amount of output heat that needs to be rejected by the cooling system for the corresponding fuel cell system power level or output. The output heat is also referred to as waste heat because it is produced by the fuel cell system as a byproduct of its operation, as well as by one or more additional heat sources.

As the fuel cell power output increases, the heat rejection demand increases i.e. the fuel cell system needs to generate more power to drive components of the cooling system. For example, as a fuel cell vehicle traveling a route is driving uphill and the fuel cell system generates more electric power than e.g. on flatter parts of the route, higher amounts of waste heat are generated by the fuel cell system, and an amount of heat to be dissipated by the cooling system increases. Thus, different cooling electrical power values may be determined for corresponding fuel cell system power outputs, depending on determining or predicting how much waste heat, produced at least by the fuel cell system, the cooling system would need to reject at the particular fuel cell system power output.

In some examples, the cooling system of the fuel cell vehicle may comprise at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device. The at least one auxiliary cooling device of the cooling system may comprise one or more of a cooling fan, a coolant pump, an air compressor, and/or other devices.

In some examples, a cooling electrical power value may be determined using at least the ambient condition data of the environment where the fuel cell system is operating or is expected to be operating and the cooling electrical power required to be supplied by the fuel cell system to the at least one auxiliary cooling device. The cooling electrical power value may additionally be determined using one or more of a state of health (SoH) of the fuel cell system, an efficiency of the cooling system, one or more fuel cell vehicle conditions, a temperature of the coolant circulating in the cooling system, and heat rejection requirements of one or more additional heat sources.

The one or more additional heat sources may comprise an ESS e.g. one or more batteries, an air conditioning system, and/or other components that generate heat during operation of the fuel cell vehicle.

The temperature of the coolant may be determined, e.g., at the coolant inlet and/or a coolant outlet of the fuel cell stack. One or more fuel cell vehicle conditions may comprise a current or predicted speed of the fuel cell vehicle, a weight of a load carried by the fuel cell vehicle, and other conditions. It should be noted that the SoH of the fuel cell system, the efficiency of the cooling system, and the temperature of the coolant circulating in the cooling system may be considered to be one or more fuel cell vehicle conditions.

In some examples, the fuel cell system may comprise more than one fuel cell stack, and the SoH of the at least one fuel cell stack may be determined based on a lowest SoH among the corresponding SoHs of the fuel cell stacks. In some examples, the SoH of the at least one fuel cell stack may be determined based on an average SoH of the fuel cell stacks, or as another type of combination of SoHs of the individual stacks. In some examples, the SoH of each of the fuel cell stacks may be assessed separately.

In some examples, the SoH of the fuel cell stack may be defined as or based on one or more of a voltage level of the fuel cell stack at a certain current, a difference between the voltage level of the fuel cell stack at the certain current and a reference voltage at the certain current, a number of operating hours of the fuel cell stack, and a number of start/stop events for the fuel cell stack i.e. that the fuel cell stack has experienced. In some examples, the SoH of the fuel cell stack may be defined based on one or more of the difference between the voltage level of the fuel cell stack at the certain current and the reference voltage at the certain current, the number of operating hours of the fuel cell stack, and the number of start/stop events for the fuel cell stack. In some examples, the SoH of the fuel cell stack may be defined based on the difference between the voltage level of the fuel cell stack at the certain current and the reference voltage at the certain current and the number of operating hours of the fuel cell stack.

The voltage level can be defined as a measured level of voltage at the output of the fuel cell stack. In some examples, to assess an SoH of the fuel cell stack, at every power level of that fuel cell stack, it is possible to check the voltage and current output from the fuel cell stack against a known or reference voltage and current values corresponding to that power level.

For the fuel cell stack, an output voltage for a given current output, which can also be referred to as a current density, may be known. As the fuel cell stack ages, the known relationship between the output voltage and the current output changes such that a difference may be observed between the voltage level of the fuel cell stack at the certain current and a reference voltage at the same certain current. For example, when the measured voltage level of the fuel cell stack at the certain current is below the reference voltage at the same certain current, the control system may determine that the SoH of the fuel cell stack has decreased.

The number of operating hours of the fuel cell stack can be defined as a number of hours that the fuel cell stack has been operated i.e. has been active or activated. In some cases, the number of operating hours of the fuel cell stack may not include periods of inactivity of the fuel cell stack. The number of start/stop events for the fuel cell stack can be defined as a number of times that fuel cell stack has been activated or started and deactivated or stopped. Other parameters may be used to determine the SoH of the fuel cell stack. One or more of the parameters may be used, alone or in combination, to determine the SoH of the fuel cell stack. The SoH of fuel cell stack may be determined using various approaches. The SoH of a fuel cell stack may be expressed in percentage units, or in other suitable units. For example, the fuel cell stack with 100% SoH may be in the beginning of its lifetime and its condition may be defined by certain values of one or more parameters used to indicate an SoH of the stack, while a lower percentage of an SoH of a fuel cell stack may indicate a certain level of degradation of the fuel cell stack as indicated by different values of the one or more parameters.

The SoH of the fuel cell stack may be monitored and updated, as the fuel cell stack ages, throughout a lifetime of the fuel cell stack. In some examples, a mission management system of the fuel cell vehicle may store information on the SoH of each fuel cell stack of the fuel cell system. The control system may receive or obtain this information from the mission management system. In some cases, the mission management system may be part of the control system.

The efficiency of the cooling system may be determined based on determining an ability of the cooling system to dissipate heat. For example, an amount of power that the cooling system e.g. at least one auxiliary cooling device requires to dissipate a certain amount of heat, as compared to a reference amount of power, may be measured to determine how efficiently the cooling system absorbs heat. An additional or alternative way may include measuring a flow rate of the coolant flowing in the coolant system, and determining a change in the flow rate with time. A difference between a current efficiency of the cooling system and an efficiency of the cooling system when it was new may be indicative of degradation in the efficiency of the cooling system.

At **block 606,** the control system may, for the fuel cell vehicle operated in the normal operating mode, determine and/or obtain a first fuel cell system output level threshold for a normal operating mode. The obtaining of the first fuel cell system output level threshold for the normal operating mode may involve determining the first fuel cell system output level threshold. The first fuel cell system output level threshold may be determined at any time, such that, in some examples, the first fuel cell system output level threshold may be known in advance when the process 600 is performed. Accordingly, in some cases, the determining of the first fuel cell system output level threshold for the normal operating mode may be performed before the process 600 is performed. In such cases, the control system may obtain the first fuel cell system output level threshold during performing the process 600.

In some examples, the first fuel cell system output level threshold may be determined as part of the process 600.

The first fuel cell system output level threshold may be such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

The fuel cell system of the fuel cell vehicle may generate a plurality of fuel cell system power outputs comprising at least two fuel cell system power outputs. The control system e.g. the processing circuitry of the control system may, for each fuel cell system power output in a plurality of fuel cell system power outputs comprising at least two fuel cell system power outputs, determine, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output. The control system may also determine, using the cooling electrical power value, a net electric power output value indicative of the net electric power output that can be supplied from the fuel cell system to one or more electric power consumers, separate from the fuel cell system, when operating so as to produce the fuel cell system power output. The net electric power output value may be determined as shown, e.g., at block 604.

The control system may further use the net electric power output value for each fuel cell system power output in the plurality of fuel cell system power outputs for determining the first fuel cell system output level threshold for the fuel cell system, the first fuel cell system output level threshold being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output in the plurality of fuel cell system power outputs exceeding the first fuel cell system output level threshold.

In some examples, the first fuel cell system output level threshold for the fuel cell vehicle operated in the normal operating mode may be determined as described in a copending European Patent Application No. EP24207395.5, which is hereby incorporated by reference herein in its entirety.

In examples herein, the first fuel cell system output level threshold may indicate a value or level of a fuel cell system output above which the net electric power output value decreases despite the further increase in the fuel cell system output. For example, with reference to FIG. 5, this may be a point Tr_n shown in FIG. 5.

At **block 608,** the control system may determine and/or obtain a second fuel cell system output level threshold which may be such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold. The second fuel cell system output level threshold for the hot operating mode, e.g., the operating point Tr_h in FIG. 5, is greater or larger than the first fuel cell system output level threshold for the normal operating mode, e.g., the operating point Tr_n in FIG. 5.

The obtaining of the second fuel cell system output level threshold for the hot operating mode may involve determining the second fuel cell system output level threshold. The second fuel cell system output level threshold may be determined at any time, such that, in some examples, the second fuel cell system output level threshold may be known in advance when the process 600 is performed. In such cases, the control system may obtain the second fuel cell system output level threshold during performing the process 600.

In some examples, the second fuel cell system output level threshold may be determined as part of the process 600.

The fuel cell system of the fuel cell vehicle may generate a plurality of fuel cell system power outputs comprising at least two fuel cell system power outputs. The control system e.g. the processing circuitry of the control system may, for each fuel cell system power output in a plurality of fuel cell system power outputs comprising at least two fuel cell system power outputs, determine, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output. The control system may also determine, using the cooling electrical power value, a net electric power output value indicative of the net electric power output that can be supplied from the fuel cell system to one or more electric power consumers, separate from the fuel cell system, when operating so as to produce the fuel cell system power output. The net electric power output value may be determined as shown, e.g., at block 604.

The control system may further use the net electric power output value for each fuel cell system power output in the plurality of fuel cell system power outputs for determining the second fuel cell system output level threshold for the fuel cell system, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output in the plurality of fuel cell system power outputs exceeding the second fuel cell system output level threshold.

The second fuel cell system output level threshold may be determined based on a target fuel cell system power output and a target cooling electrical power value indicative of a cooling electrical power required to be supplied by the fuel cell system to the cooling system for rejecting output heat that is generated at least by the fuel cell system when operating so as to produce the target fuel cell system power output.

In some examples, the second fuel cell system output level threshold for the fuel cell vehicle operated in the hot operating mode may be determined as described in a copending European Patent Application No. EP24207395.5, which is hereby incorporated by reference herein in its entirety.

At **block 610,** when the fuel cell vehicle is operated in the normal operating mode and the required value of the traction power is above the first fuel cell system output level threshold, the control system may control the fuel cell vehicle to transition from the normal operating mode to the hot operating mode by increasing the net electric power output value to the second fuel cell system output level threshold. The second fuel cell system output level threshold may be such that, when the fuel cell system is operating in the hot operating mode so as to produce a fuel cell system power output corresponding to the second fuel cell system output level threshold, the net electric power output value is larger than the net electric power output value obtained when the fuel cell system is operating in the hot operating mode so as to produce a fuel cell system power output exceeding the second fuel cell system output level threshold. Controlling the fuel cell vehicle to transition from the normal operating mode to the hot operating mode, which comprises the power operating mode, may comprise controlling, such as sending instructions to the fuel cell system and/or the cooling system of the fuel cell vehicle, so that the target coolant inlet temperature becomes equal to the hot coolant temperature and the net electric power output value becomes equal to the second fuel cell system output level threshold. The processing at block 610 may be performed as shown in FIGs. 6B and 6C discussed below.

**FIG. 6B** continues illustration of the method 600 and shows in more detail an example of controlling the fuel cell vehicle to transition from the normal operating mode to the hot operating mode via the conservative transition mode. The processing shown in FIG. 6B may be performed as part of the processing at block 610 in FIG. 6A.

At **block 612** of FIG. 6B, the control system may determine whether the fuel cell system (FCS) power output is at a target fuel cell system power output, denoted as Tr_h FCS power output in FIG. 6B. When the fuel cell system power output is at from the target fuel cell system power output ("Yes"), the process 600 may end as shown in FIG. 6C. When the fuel cell system power output is not the target fuel cell system power output ("No"), such as below the target fuel cell system power output as would be the case when the fuel cell vehicle is operated in the normal operating mode, the process 600 may follow to block 614.

At **block 614,** the control system may determine which transition mode should be used to control or instruct the fuel cell vehicle to transition from the normal operating mode to the hot operating mode. At this point, the fuel cell vehicle may be operated in the normal operating mode. When it is determined that the fuel cell vehicle is to be transitioned to the hot operating mode via the fast or normal transition modes, the process 600 may follow to FIG. 6C.

When it is determined that the fuel cell vehicle is to be transitioned to the hot operating mode via the conservative transition mode, the process 600 may proceed as shown in FIG. 6B. With reference to FIG. 5, this may be a scenario shown by the path 510 in FIG. 5.

Thus, **at block 616,** the control system may control the fuel cell vehicle, such as the fuel cell system of the fuel cell vehicle, to increase the fuel cell system power output. The fuel cell system may be controlled by, e.g., sending control instructions to the fuel cell system to adjust a flow of hydrogen to the anode of the fuel cell stack of the fuel cell system and/or adjust a flow of oxygen or air to the cathode of the fuel cell stack. The fuel cell system power output may be increased by increasing the flows of reactants such as the hydrogen and the oxygen or air to the fuel cell stack.

At blocks 618 and 620, simultaneously with increasing the fuel cell system power output, the control system may control the fuel cell vehicle, such as the cooling system of the fuel cell vehicle, to increase the cooling electrical power until the cooling electrical power reaches the target cooling electrical power value.

In particular, at **block 618,** the control system may determine whether the cooling electrical power has reached, or is at, the target cooling electrical power value that corresponds to the second fuel cell system output level threshold. When it is determined that the cooling electrical power has not reached the target cooling electrical power value, the process 600 may follow to **block 620** where the control system may control the cooling system of the fuel cell vehicle to increase the cooling electrical power. In examples herein, increasing the cooling electrical power may comprise one or more of increasing a speed of a cooling fan and increasing a speed of a coolant pump, though other components of the cooling system may be controlled as well. The cooling electrical power may be increased as per a normal or standard relationship to the fuel cell system power output. When the cooling electrical power is changed e.g. increased as per the normal or standard relationship to the fuel cell system power output, a coolant inlet temperature will not change. In general, according to the standard relationship between cooling electrical power and a fuel cell system power output, the coolant inlet temperature may be maintained constant, regardless of the fuel cell system power output.

Increasing the cooling electrical power may occur simultaneously with increasing the fuel cell system power output at block 616. The process 600 may return to block 618 to again check whether the cooling electrical power has reached the target cooling electrical power. The process 600 may continue controlling the cooling system to increase the cooling electrical power until the control system determines, at block 618, that the cooling electrical power has reached, or is at, the target cooling electrical power. Once the cooling electrical power has reached the target cooling electrical power, the cooling electrical power may be maintained or kept at a level of the target cooling electrical power, at **block 622**.

At **block 624,** the control system may determine whether the coolant inlet temperature is equal the hot coolant temperature. The processing at block 624 may be performed when the cooling electrical power has reached the target cooling electrical power value or at least partially simultaneously with increasing the cooling electrical power and determining whether the cooling electrical power has reached the target cooling electrical power.

When it is determined that the coolant inlet temperature is not equal to the hot coolant temperature ("No"), the process 600 may follow to block 616 where the fuel cell system power output is increased. At this point, the cooling electrical power, which has reached the target cooling electrical power value, is maintained constant.

When it is determined that the coolant inlet temperature is equal to the hot coolant temperature ("Yes"), whereby the fuel cell vehicle has assumed the hot operating mode, the process 600 may proceed to block 612 where the control system may determine whether the fuel cell system power output is at a target fuel cell system power output.

When the control system determines that the fuel cell system power output is not at the target fuel cell system power output, such as below the target fuel cell system power output, the process may follow, via block 614, to the processing at block 616 to control the fuel cell system to increase the fuel cell system power output, until the fuel cell system power output reaches the target fuel cell system power output and the net electric power output value thereby reaches the second fuel cell system output level threshold. In some examples, from block 616, the process 600 may return, via block 624 wherein at this point it would be determined that the coolant inlet temperature is at the hot coolant temperature, to block 612, from which the process 600 may return to block 616 to control the fuel cell system to further increase the fuel cell system power output. The fuel cell system power output may be increased until it reaches the target fuel cell system power output corresponding to the second fuel cell system output level threshold.

Accordingly, in some examples, in the conservative mode, when the cooling electrical power has reached the target cooling electrical power value, the control system may control the fuel cell vehicle to increase the fuel cell system power output until the coolant inlet temperature is equal the hot coolant temperature and the net electric power output value reaches the second fuel cell system output level threshold, while keeping the cooling electrical power constant once the cooling electrical power has reached the target cooling electrical power value.

Referring to block 614, in cases when the control system selects, at block 614 of FIG. 6B, the fast or normal the transition mode, the process 600 may follow to FIG. 6C.

**FIG. 6C** continues illustration of the method or process 600 and shows in more detail an example of controlling the fuel cell vehicle to transition the fuel cell vehicle from the normal operating mode to the hot operating mode via the fast transition mode or the normal transition mode. The processing shown in FIG. 6C may be performed as part of the processing at block 610 in FIG. 6A.

At **block 626,** the control system may determine which of the fast and normal transition modes should be used to control or instruct the fuel cell vehicle to transition from the normal operating mode to the hot operating mode. At this point, the fuel cell vehicle may be operated in the normal operating mode. It should be noted that some steps of the transition from the normal operating mode to the hot operating mode via the fast and normal transition modes may overlap.

When it is determined that the fuel cell vehicle is to be transitioned to the hot operating mode via the fast transition mode, the process 600 may proceed to block 628 as shown in FIG. 6C. With reference to FIG. 5, this may be a scenario shown by the fast transition mode path 506 in FIG. 5.

At **block 628,** the control system may control the cooling system of the fuel cell vehicle to decrease the cooling electrical power by a certain value while maintaining the fuel cell system power output constant to increase the coolant inlet temperature. In examples herein, decreasing the cooling electrical power may comprise one or more of decreasing a speed of a cooling fan and decreasing a speed of a coolant pump, though other components of the cooling system may be controlled as well.

Thus, as discussed in more detail below, in the fast transition mode, the control system may control the fuel cell vehicle to adjust the fuel cell power output and/or the cooling electrical power until the coolant inlet temperature reaches the hot coolant temperature. The adjusting of the fuel cell system power output and/or the cooling electrical power until the coolant inlet temperature reaches the hot coolant temperature may be performed e.g. as at blocks 630, 632, 634, 636, and 638 of FIG. 6C. The control system may also control the fuel cell vehicle, after the coolant inlet temperature has reached the hot coolant temperature, to adjust the fuel cell system power output and/or the cooling electrical power until the net electric power output value reaches the second fuel cell system output level threshold. The adjusting of the fuel cell system power output and/or the cooling electrical power until the net electric power output value reaches the second fuel cell system output level threshold may be performed e.g. as at blocks 612, 628, 630, 632, 634, 636, and 638 of FIG. 6C.

At **block 630,** the control system may determine whether the coolant inlet temperature has reached, i.e. is at, the hot coolant temperature.

At **block 632,** when the coolant inlet temperature is below the hot coolant temperature, the control system may control the fuel cell system to increase the fuel cell power output.

At **block 634,** when the coolant inlet temperature is above the hot coolant temperature, the control system determine whether the cooling electrical power is at the target cooling electrical power value corresponding to the second fuel cell system output level threshold. The coolant inlet temperature may become to be above the hot coolant temperature in some circumstances which is not desirable because operating the fuel cell system at a temperature above the hot coolant temperature may cause a damage to the membrane of the fuel cell stack. Accordingly, certain actions will need to be taken to reduce the coolant inlet temperature if it has increased above the hot coolant temperature.

At **block 636,** when the coolant inlet temperature is above the hot coolant temperature and the control system has determined that the cooling electrical power is not at the target cooling electrical power value, such as below the target cooling electrical power value, the control system may control the cooling system to increase the cooling electrical power, until the cooling electrical power reaches the target cooling electrical power value. The cooling electrical power may be increased as per the normal or standard relationship to the fuel cell system power output. The cooling electrical power may be increased without exceeding the target cooling electrical power value.

Thus, as shown in FIG. 6C, from block 636, the process 600 may follow to block 630 and then to block 634, from which the process 600 may return to block 636 wherein the control system may control the cooling system to increase the cooling electrical power, in accordance with the normal or standard relationship to the fuel cell system power output.

At **block 638,** when the coolant inlet temperature is above the hot coolant temperature and the control system has determined that the cooling electrical power is not below the target cooling electrical power value, such as at or above, or in other words equal to or greater than, the target cooling electrical power value, the control system may control the fuel cell system to decrease the fuel cell power output. The fuel cell system power output may be decreased by decreasing the flows of reactants such as the hydrogen and the oxygen or air to the fuel cell stack of the fuel cell system.

As shown in FIG. 6C, from block 638, the process 600 may follow to block 630, and the processing may be repeated until it is determined, at block 630, that the coolant inlet temperature has become equal to the hot coolant temperature. If this is the case, as shown in FIG. 6C, the process 600 may follow to block 612 shown in FIG. 6B wherein the control system may determine whether the fuel cell system power output is at the target fuel cell system power output. When the fuel cell system power output is at the target fuel cell system power output, the process 600 may end. Alternatively, when the fuel cell system power output is not at the target fuel cell system power output, as determined at block 612, the process 600 may be repeated as described for the fast transition mode. The transition of the fuel cell vehicle to the hot operating mode is controlled to occur via the fast transition mode when the fast transition mode was selected among the transition modes. This may be performed until the fuel cell system power output is at the target fuel cell system power output, such that the net electric power output value reaches the second fuel cell system output level threshold.

Referring back to block 626 of FIG. 6C, when it is determined that the fuel cell vehicle is to be transitioned to the hot operating mode via the normal transition mode, the process 600 may proceed to block 632 as shown in FIG. 6C. With reference to FIG. 5, this may be a scenario shown by the normal transition mode path 508 in FIG. 5. The description of the transition to the hot operating mode via the normal transition mode involves the processing at the same blocks of FIG. 6C as those described above in connection with the transition to the hot operating mode via the fast transition mode. The description of the transition to the hot operating mode via the normal transition mode is provided for completeness of the disclosure.

At **block 632,** when the coolant inlet temperature is below the hot coolant temperature, which will be the case because the fuel cell vehicle is operated in the normal operating point in this case, the control system may control the fuel cell system to increase the fuel cell power output while maintaining the cooling electrical power constant to increase the coolant inlet temperature.

In the normal transition mode, the control system may control the fuel cell vehicle to adjust the fuel cell power output and/or the cooling electrical power until the coolant inlet temperature reaches the hot coolant temperature. The adjusting of the fuel cell system power output and/or the cooling electrical power until the coolant inlet temperature reaches the hot coolant temperature may be performed e.g. as at blocks 630, 632, 634, 636 and 638 of FIG. 6C. The control system may also control the fuel cell vehicle, after the coolant inlet temperature has reached the hot coolant temperature, to adjust the fuel cell system power output and/or the cooling electrical power until the net electric power output value reaches the second fuel cell system output level threshold. The adjusting of the fuel cell system power output and/or the cooling electrical power until the net electric power output value reaches the second fuel cell system output level threshold may be performed e.g. as at blocks 612, 632, 630, 634, 636, and 638 of FIG. 6C.

At **block 630,** the control system may determine whether the coolant inlet temperature has reached, i.e. is at, the hot coolant temperature.

At **block 632,** when the coolant inlet temperature is below the hot coolant temperature, the control system may control the fuel cell system to increase the fuel cell power output.

At **block 634,** when the coolant inlet temperature is above the hot coolant temperature, the control system determine whether the cooling electrical power is at the target cooling electrical power value corresponding to the second fuel cell system output level threshold. The coolant inlet temperature may become to be above the hot coolant temperature in some circumstances which is not desirable because operating the fuel cell system at a temperature above the hot coolant temperature may cause a damage to the membrane of the fuel cell stack. Accordingly, certain actions will need to be taken to reduce the coolant inlet temperature if it has increased above the hot coolant temperature.

At **block 636,** when the coolant inlet temperature is above the hot coolant temperature and the control system has determined that the cooling electrical power is not at the target cooling electrical power value, such as below the target cooling electrical power value, the control system may control the cooling system to increase the cooling electrical power, until the cooling electrical power reaches the target cooling electrical power value. Thus, as shown in FIG. 6C, from block 636, the process 600 may follow to block 630 and then to block 634, from which the process 600 may return to block 636 wherein the control system may control the cooling system to increase the cooling electrical power.

At **block 638,** when the coolant inlet temperature is above the hot coolant temperature and the control system has determined that the cooling electrical power is at the target cooling electrical power value, the control system may control the fuel cell system to decrease the fuel cell power output. As shown in FIG. 6C, from block 638, the process 600 may follow to block 630, and the processing may be repeated until it is determined, at block 630, that coolant inlet temperature has become equal to the hot coolant temperature. If this is the case, as shown in FIG. 6C, the process 600 may follow to block 612 shown in FIG. 6B wherein the control system may determine whether the fuel cell system power output is at the target fuel cell system power output. When the fuel cell system power output is at the target fuel cell system power output, the process 600 may end. Alternatively, when the fuel cell system power output is not at the target fuel cell system power output, as determined at block 612, the process 600 may be repeated as described for the fast transition mode. This may be performed until the fuel cell system power output is at the target fuel cell system power, such that the net electric power output value reaches the second fuel cell system output level threshold.

To perform the method steps described herein, the control system 30, such as the processing circuitry 32 of the control system 30, may be configured to perform the processing described in connection with FIGs. 6A, 6B, 6C and/or any other examples in accordance with the present disclosure.

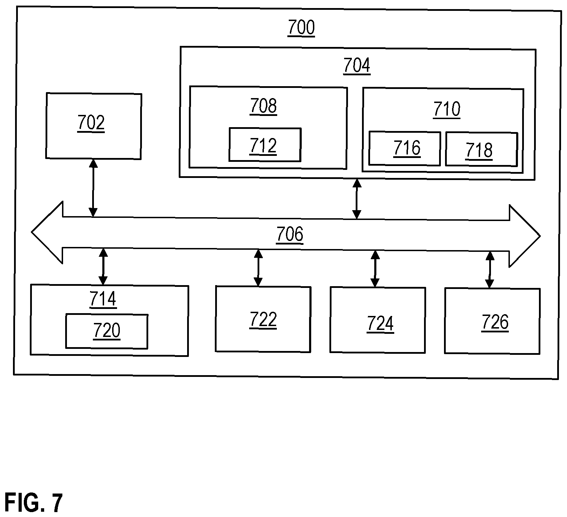

**FIG. 7** is a schematic diagram of a computer system **700** for implementing examples disclosed herein. The control system 30 may be implemented as the computer system 700. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples which may respectively be combined with any of the other examples herein.

### EXAMPLES

Example 1. A control system for a fuel cell vehicle comprising a fuel cell system comprising a fuel cell stack configured to generate power by electrochemical reaction, and a cooling system configured to circulate a coolant through the fuel cell system to dissipate heat generated by the fuel cell system,
the control system comprising processing circuitry that is configured to control transition of the fuel cell vehicle from a normal operating mode to a hot operating mode, wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature, the processing circuitry is configured to:
determine a required value of a traction power from the fuel cell system for the fuel cell vehicle;
determine a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output; and
when the fuel cell vehicle is operated in the normal operating mode and the required value of the traction power is above a first fuel cell system output level threshold, control the fuel cell vehicle to transition from the normal operating mode to the hot operating mode by increasing the net electric power output value to a second fuel cell system output level threshold, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

Example 2. The control system of Example 1, wherein the processing circuitry is configured to, when the fuel cell vehicle is operated in the normal operating mode, control the fuel cell vehicle to transition from the normal operating mode to the hot second operating mode via a fast transition mode, by controlling the fuel cell vehicle to:
decrease the cooling electrical power by a certain value while maintaining the fuel cell system power output constant to increase the coolant inlet temperature;
adjust the fuel cell power output and/or the cooling electrical power until the coolant inlet temperature reaches the hot coolant temperature; and
after the coolant inlet temperature has reached the hot coolant temperature, adjust the fuel cell system power output and/or the cooling electrical power until the net electric power output value reaches the second fuel cell system output level threshold.

Example 3. The control system of Example 1 or Example 2, wherein the processing circuitry is configured to, when the fuel cell vehicle is operated in the normal operating mode, control the fuel cell vehicle to transition from the normal operating mode to the hot second operating mode via a normal transition mode, by controlling the fuel cell vehicle to:
increase the fuel cell system power output while maintaining the cooling electrical power constant to increase the coolant inlet temperature;
adjust the fuel cell power output and/or the cooling electrical power until the coolant inlet temperature reaches the hot coolant temperature; and
after the coolant inlet temperature has reached the hot coolant temperature, adjust the fuel cell system power output and/or the cooling electrical power until the net electric power output value reaches the second fuel cell system output level threshold.

Example 4. The control system of Example 2 or Example 3, wherein the processing circuitry is configured to control the fuel cell vehicle to adjust the fuel cell power output and/or the cooling electrical power, until the coolant inlet temperature reaches the hot coolant temperature, by controlling the fuel cell vehicle to:
when the coolant inlet temperature is below the hot coolant temperature, increase the fuel cell power output;
when the coolant inlet temperature is above the hot coolant temperature and the cooling electrical power is below a target cooling electrical power value corresponding to the second fuel cell system output level threshold, increase the cooling electrical power until the cooling electrical power reaches the target cooling electrical power value; and
when the coolant inlet temperature is above the hot temperature threshold and the cooling electrical power is at or above the target cooling electrical power value, decrease the fuel cell power output.

Example 5. The control system of any one of Examples 1 to 4, wherein the processing circuitry is configured to, when the fuel cell vehicle is operated in the normal operating mode, control the fuel cell vehicle to transition from the normal operating mode to the hot second operating mode via a conservative transition mode, by controlling the fuel cell vehicle to:
increase the fuel cell system power output;
simultaneously with increasing the fuel cell system power output, increase the cooling electrical power until the cooling electrical power reaches the target cooling electrical power value; and
when the cooling electrical power has reached the target cooling electrical power value, increase the fuel cell system power output until the coolant inlet temperature is equal the hot coolant temperature and the net electric power output value reaches the second fuel cell system output level threshold, while keeping the cooling electrical power constant once the cooling electrical power has reached the target cooling electrical power value.

Example 6. The control system of any one of Examples 1 to 5, wherein the processing circuitry is configured to, for the fuel cell vehicle operated in the normal operating mode, determine and/or obtain the first fuel cell system output level threshold for the fuel cell system, the first fuel cell system output level threshold being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

Example 7. The control system of any one of Examples 1 to 6, wherein the processing circuitry is configured to, for the fuel cell vehicle operated in the hot operating mode, determine and/or obtain the second fuel cell system output level threshold for the fuel cell system, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

Example 8. A fuel cell vehicle comprising a control system of any one of Examples 1 to 7.

Example 9. A method for controlling transition of a fuel cell vehicle from a normal operating mode to a hot operating mode, the fuel cell vehicle comprising a fuel cell system comprising a fuel cell stack configured to generate power by electrochemical reaction, and a cooling system configured to circulate a coolant through the fuel cell system to dissipate heat generated by the fuel cell system,
wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature, the method comprising:
determining a required value of a traction power from the fuel cell system for the fuel cell vehicle;
determining a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output; and
when the fuel cell vehicle is operated in the normal operating mode and the required value of the traction power is above the first fuel cell system output level threshold, controlling the fuel cell vehicle to transition from the normal operating mode to the hot operating mode by increasing the net electric power output value to a second fuel cell system output level threshold, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

Example 10. The method of Example 9, comprising, when the fuel cell vehicle is operated in the normal operating mode, controlling the fuel cell vehicle to transition from the normal operating mode to the hot second operating mode via a fast transition mode, by controlling the fuel cell vehicle to:
decrease the cooling electrical power by a certain value while maintaining the fuel cell system power output constant to increase the coolant inlet temperature;
adjust the fuel cell power output and/or the cooling electrical power until the coolant inlet temperature reaches the hot coolant temperature; and
after the coolant inlet temperature has reached the hot coolant temperature, adjust the fuel cell system power output and/or the cooling electrical power until the net electric power output value reaches the second fuel cell system output level threshold.

Example 11. The method of Example 9 or Example 10, comprising, when the fuel cell vehicle is operated in the normal operating mode, controlling the fuel cell vehicle to transition from the normal operating mode to the hot second operating mode via a normal transition mode, by controlling the fuel cell vehicle to:
increase the fuel cell system power output while maintaining the cooling electrical power constant to increase the coolant inlet temperature;
adjust the fuel cell power output and/or the cooling electrical power until the coolant inlet temperature reaches the hot coolant temperature; and
after the coolant inlet temperature has reached the hot coolant temperature, adjust the fuel cell system power output and/or the cooling electrical power until the net electric power output value reaches the second fuel cell system output level threshold.

Example 12. The method of Example 10 or Example 11, comprising controlling the fuel cell vehicle to adjust the fuel cell power output and/or the cooling electrical power, until the coolant inlet temperature reaches the hot coolant temperature, by:
when the coolant inlet temperature is below the hot coolant temperature, increasing the fuel cell power output;
when the coolant inlet temperature is above the hot coolant temperature and the cooling electrical power is below a target cooling electrical power value corresponding to the second fuel cell system output level threshold, increasing the cooling electrical power until the cooling electrical power reaches the target cooling electrical power value; and
when the coolant inlet temperature is above the hot temperature threshold and the cooling electrical power is above the target cooling electrical power value, decreasing the fuel cell power output.

Example 13. The method of any one of Examples 9 to 12, comprising, when the fuel cell vehicle is operated in the normal operating mode, controlling the fuel cell vehicle to transition from the normal operating mode to the hot second operating mode via a conservative transition mode, by controlling the fuel cell vehicle to:
increase the fuel cell system power output until the coolant inlet temperature is equal to the hot coolant temperature;
simultaneously with increasing the fuel cell system power output, increase the cooling electrical power until the cooling electrical power reaches the target cooling electrical power value, and keep the cooling electrical power constant once the cooling electrical power has reached the target cooling electrical power value; and
when the coolant inlet temperature is equal to the hot coolant temperature and the cooling electrical power has reached the target cooling electrical power value, increase the fuel cell system power output until the net electric power output value reaches the second fuel cell system output level threshold.

Example 14. The method of any one of Examples 9 to 13, comprising, for the fuel cell vehicle operated in the normal operating mode, determining and/or obtaining the first fuel cell system output level threshold for the fuel cell system, the first fuel cell system output level threshold being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

Example 15. The method of any one of Examples 9 to 14, comprising, for the fuel cell vehicle operated in the hot operating mode, determining and/or obtaining the second fuel cell system output level threshold for the fuel cell system, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

Example 16. A computer program product comprising computer-executable instructions which, when executed by processing circuitry, cause the processing circuitry to perform the method according to any one of Examples 9 to 15.

Example 17. A tangible non-transitory computer-readable storage medium comprising computer-executable instructions which, when executed by processing circuitry, cause the processing circuitry to perform the method according to any one of Examples 9 to 15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A control system (30) for a fuel cell vehicle (10) comprising a fuel cell system (20) comprising a fuel cell stack (22) configured to generate power by electrochemical reaction, and a cooling system (25) configured to circulate a coolant through the fuel cell system (20) to dissipate heat generated by the fuel cell system (20),
the control system (30) comprising processing circuitry (32) that is configured to control transition of the fuel cell vehicle from a normal operating mode to a hot operating mode, wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature, the processing circuitry is configured to:
determine (602) a required value of a traction power from the fuel cell system for the fuel cell vehicle;
determine (604) a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output; and
when the fuel cell vehicle is operated in the normal operating mode and the required value of the traction power is above a first fuel cell system output level threshold, control (610) the fuel cell vehicle to transition from the normal operating mode to the hot operating mode by increasing the net electric power output value to a second fuel cell system output level threshold, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

2. The control system of claim 1, wherein the processing circuitry is configured to, when the fuel cell vehicle is operated in the normal operating mode, control the fuel cell vehicle to transition from the normal operating mode to the hot second operating mode via a fast transition mode, by controlling the fuel cell vehicle to:
decrease (628) the cooling electrical power by a certain value while maintaining the fuel cell system power output constant to increase the coolant inlet temperature;
adjust (630, 632, 634, 636, 638) the fuel cell power output and/or the cooling electrical power until the coolant inlet temperature reaches the hot coolant temperature; and
after the coolant inlet temperature has reached the hot coolant temperature, adjust (612, 628, 630, 632, 634, 636, 638) the fuel cell system power output and/or the cooling electrical power until the net electric power output value reaches the second fuel cell system output level threshold.

3. The control system of claim 1 or claim 2, wherein the processing circuitry is configured to, when the fuel cell vehicle is operated in the normal operating mode, control the fuel cell vehicle to transition from the normal operating mode to the hot second operating mode via a normal transition mode, by controlling the fuel cell vehicle to:
increase (632) the fuel cell system power output while maintaining the cooling electrical power constant to increase the coolant inlet temperature;
adjust (630, 632, 636, 638) the fuel cell power output and/or the cooling electrical power until the coolant inlet temperature reaches the hot coolant temperature; and
after the coolant inlet temperature has reached the hot coolant temperature, adjust (612, 632, 630, 634, 636, 638) the fuel cell system power output and/or the cooling electrical power until the net electric power output value reaches the second fuel cell system output level threshold.

4. The control system of claim 2 or claim 3, wherein the processing circuitry is configured to control the fuel cell vehicle to adjust the fuel cell power output and/or the cooling electrical power, until the coolant inlet temperature reaches the hot coolant temperature, by controlling the fuel cell vehicle to:
when the coolant inlet temperature is below the hot coolant temperature, increase (632) the fuel cell power output;
when the coolant inlet temperature is above the hot coolant temperature and the cooling electrical power is below a target cooling electrical power value corresponding to the second fuel cell system output level threshold, increase (636) the cooling electrical power until the cooling electrical power reaches the target cooling electrical power value; and
when the coolant inlet temperature is above the hot temperature threshold and the cooling electrical power is at or above the target cooling electrical power value, decrease (638) the fuel cell power output.

5. The control system of any one of claims 1 to 4, wherein the processing circuitry is configured to, when the fuel cell vehicle is operated in the normal operating mode, control the fuel cell vehicle to transition from the normal operating mode to the hot second operating mode via a conservative transition mode, by controlling the fuel cell vehicle to:
increase the fuel cell system power output;
simultaneously with increasing the fuel cell system power output, increase the cooling electrical power until the cooling electrical power reaches the target cooling electrical power value; and
when the cooling electrical power has reached the target cooling electrical power value, increase the fuel cell system power output until the coolant inlet temperature is equal the hot coolant temperature and the net electric power output value reaches the second fuel cell system output level threshold, while keeping the cooling electrical power constant once the cooling electrical power has reached the target cooling electrical power value.

6. The control system of any one of claims 1 to 5, wherein the processing circuitry is configured to, for the fuel cell vehicle operated in the normal operating mode, determine and/or obtain (606) the first fuel cell system output level threshold for the fuel cell system, the first fuel cell system output level threshold being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

7. A fuel cell vehicle (10) comprising the control system (30) of any one of claims 1 to 6.

8. A method (600) for controlling transition of a fuel cell vehicle from a normal operating mode to a hot operating mode, the fuel cell vehicle comprising a fuel cell system comprising a fuel cell stack configured to generate power by electrochemical reaction, and a cooling system configured to circulate a coolant through the fuel cell system to dissipate heat generated by the fuel cell system,
wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature, the method comprising:
determining (602) a required value of a traction power from the fuel cell system for the fuel cell vehicle;
determining (604) a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output; and
when the fuel cell vehicle is operated in the normal operating mode and the required value of the traction power is above a first fuel cell system output level threshold, controlling (610) the fuel cell vehicle to transition from the normal operating mode to the hot operating mode by increasing the net electric power output value to a second fuel cell system output level threshold, the second fuel cell system output level threshold being such that when the fuel cell system is operated in the hot operating mode so as to produce a fuel cell system power output corresponding to the second fuel cell system output level threshold, the net electric power output value is larger than the net electric power output value obtained when the fuel cell system is operated in the hot operating mode so as to produce a fuel cell system power output exceeding the second fuel cell system output level threshold.

9. The method of claim 8, comprising, when the fuel cell vehicle is operated in the normal operating mode, controlling the fuel cell vehicle to transition from the normal operating mode to the hot second operating mode via a fast transition mode, by controlling the fuel cell vehicle to:
decrease (628) the cooling electrical power by a certain value while maintaining the fuel cell system power output constant to increase the coolant inlet temperature;
adjust (630, 632, 634, 636, 638) the fuel cell power output and/or the cooling electrical power until the coolant inlet temperature reaches the hot coolant temperature; and
after the coolant inlet temperature has reached the hot coolant temperature, adjust (612, 628, 630, 632, 634, 636, 638) the fuel cell system power output and/or the cooling electrical power until the net electric power output value reaches the second fuel cell system output level threshold.

10. The method of claim 8 or claim 9, comprising, when the fuel cell vehicle is operated in the normal operating mode, controlling the fuel cell vehicle to transition from the normal operating mode to the hot second operating mode via a normal transition mode, by controlling the fuel cell vehicle to:
increase (632) the fuel cell system power output while maintaining the cooling electrical power constant to increase the coolant inlet temperature;
adjust (630, 632, 636, 638) the fuel cell power output and/or the cooling electrical power until the coolant inlet temperature reaches the hot coolant temperature; and
after the coolant inlet temperature has reached the hot coolant temperature, adjust (612, 632, 630, 634, 636, 638) the fuel cell system power output and/or the cooling electrical power until the net electric power output value reaches the second fuel cell system output level threshold.

11. The method of claim 9 or claim 10, comprising controlling the fuel cell vehicle to adjust the fuel cell power output and/or the cooling electrical power, until the coolant inlet temperature reaches the hot coolant temperature, by:
when the coolant inlet temperature is below the hot coolant temperature, increasing (632) the fuel cell power output;
when the coolant inlet temperature is above the hot coolant temperature and the cooling electrical power is below a target cooling electrical power value corresponding to the second fuel cell system output level threshold, increasing (636) the cooling electrical power until the cooling electrical power reaches the target cooling electrical power value; and
when the coolant inlet temperature is above the hot temperature threshold and the cooling electrical power is at or above the target cooling electrical power value, decreasing (638) the fuel cell power output.

12. The method of any one of claims 8 to 11, comprising, when the fuel cell vehicle is operated in the normal operating mode, controlling the fuel cell vehicle to transition from the normal operating mode to the hot second operating mode via a conservative transition mode, by controlling the fuel cell vehicle to:
increase (616) the fuel cell system power output until the coolant inlet temperature is equal to the hot coolant temperature;
simultaneously with increasing the fuel cell system power output, increase (620) the cooling electrical power until the cooling electrical power reaches the target cooling electrical power value, and keep (622) the cooling electrical power constant once the cooling electrical power has reached the target cooling electrical power value; and
when the coolant inlet temperature is equal to the hot coolant temperature and the cooling electrical power has reached the target cooling electrical power value, increase the fuel cell system power output (616) until the net electric power output value reaches the second fuel cell system output level threshold.

13. The method of any one of claims 8 to 12, comprising, for the fuel cell vehicle operated in the normal operating mode, determining and/or obtaining (606) the first fuel cell system output level threshold for the fuel cell system, the first fuel cell system output level threshold being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

14. A computer program product comprising computer-executable instructions which, when executed by processing circuitry, cause the processing circuitry to perform the method according to any one of claims 8 to 13.

15. A tangible non-transitory computer-readable storage medium comprising computer-executable instructions which, when executed by processing circuitry, cause the processing circuitry to perform the method according to any one of claims 8 to 13.
